# EUROPEAN PATENT APPLICATION

(11) **EP 4 475 089 A1**
(43) Date of publication of application: **11.12.2024**
(21) Application number: 23177161.9
(22) Date of filing: 05.06.2023
(51) Int. Cl.: G06V 10/82, G06V 20/58

(54) **DEVICE AND METHOD FOR DETERMINING A TRAJECTORY OF AN OBJECT**

(71) Applicant: Robert Bosch GmbH, 70442 Stuttgart (DE)
(72) Inventor: Naumann, Maximilian, 76133 Karlsruhe (DE); Paparusso, Luca, 70197 Stuttgart (DE)

(57) **Abstract**

Computer-implemented method for predicting an output signal (*y*) characterizing a future trajectory of an object, wherein the method comprises the steps of:
• Obtaining an input signal (*x*) characterizing a measurement of a trajectory of the object;
• Obtaining a behavior signal (*b*) characterizing a behavior classification of the trajectory or the future trajectory, e.g., classifying the trajectory as aggressive behavior or a passive behavior;
• Determining the output signal (*y*) by providing the input signal (*x*) and the behavior signal (*b*) as input to a machine learning system (60), wherein the machine learning system (60) is configured to determine an output signal (*y*) characterizing a future trajectory an object based on the values of an input signal (*x*) characterizing a measurement of a trajectory of the object and a behavior signal (*b*) characterizing a behavior classification of the trajectory.

## Description

### Technical field

The invention relates to a method for determining trajectory of an object by means of a machine learning system, a method for training the machine learning system, a training system, a control system for control a technical system, a computer program, and a machine-readable storage medium.

### Prior art

Huang et al.: "Multimodal Trajectory Prediction: A Survey", 2023, https://arxiv.org/pdf/2302.10463.pdf discloses a survey on recent trajectory prediction methods.

### Technical background

Determining a future trajectory of objects moving in the physical world is a recurring problem for many different technical applications. Especially in the field of robotics, where a robot has to plan a movement such that no collision with other moving objects is provoked, determining future trajectories are integral problems for accurately steering a robot. For example, an at least partially automated vehicle has to consider the paths other traffic participants will likely take in order to plan a route that is safe, i.e., free from collision with other traffic participants such as pedestrians, cyclists, or cars.

Typically, a future trajectory of an object in the physical world is predicted using methods from the field of machine learning. One difficulty in learning to predict a future trajectory is that multiple different future motions and hence multiple different trajectories of an object are possible. Especially when predicting the trajectories of humans or vehicles steered by humans, a future motion, amongst others, depends on properties of the human, which is highly uncertain (e.g., is the human rather dynamic or defensive in its motion?).

The inventors found that prediction of trajectories can be improved when incorporating a behavior of the object for which a trajectory shall be predicted as input to a machine learning system configured for predicting the trajectory.

### Disclosure of the invention

In a first aspect, the invention concerns a computer-implemented method for predicting an output signal (y) characterizing a future trajectory of an object, wherein the method comprises the steps of:
- Obtaining an input signal (x) characterizing a measurement of a trajectory of the object;
- Obtaining a behavior signal (*b*) characterizing a behavior classification of the trajectory or the future trajectory, e.g., classifying the trajectory or future trajectory as aggressive behavior or a passive behavior;
- Determining the output signal (*y*) by providing the input signal (*x*) and the behavior signal (*b*) as input to a machine learning system (60), wherein the machine learning system (60) is configured to determine an output signal (*y*) characterizing a future trajectory an object based on the values of an input signal (*x*) characterizing a measurement of a trajectory of the object and a behavior signal (*b*) characterizing a behavior classification of the trajectory.

Preferably, a trajectory characterizes, i.e., comprises or consists of, multiple future positions and/or velocities and/or accelerations of an object at different points in time. A future trajectory refers to a future evolution of a trajectory. The future trajectory of the object in the method may be understood as a prediction about a continuation of the measured trajectory.

The output signal characterizing the trajectory can be understood as the output signal comprising or consisting of values that represent the trajectory. The output signal may also comprise other values beside the trajectory.

Likewise, the input signal characterizing a measurement of a trajectory may be understood as the input signal comprising or consisting of values that represent the trajectory. Preferably, the input signal comprises additional values besides the trajectory, for example trajectories of other vehicles that may have an influence on the future trajectory, information about possible paths the future trajectory may evolve along, e.g., in form of a map of roads, environment conditions such as weather. From a data point of view, the input signal may especially be expressed as a sequence of vectors, wherein each vector comprises all or some of the aforementioned additional values and the measurement of the trajectory.

The behavior signal characterizing a behavior classification of the trajectory may especially be understood as the behavior signal comprising or consisting of values that represent the behavior classification of the object so far and based on the trajectory, i.e., its trajectory so far. Alternatively, the behavior signal may be chosen to classify the future trajectory. The behavior signal may, for example, be supplied by a user to determine the route when considering a specific behavior classification characterized by the user-defined behavior signal. It is also possible to run the method a plurality of times with different behavior classifications, e.g., all different behavior classifications, in order to get gather predicted trajectories under a plurality of different behavior classifications.

From a data point of view, the behavior signal may comprise or consist of class indices corresponding to behavior classes and/or probabilities for the respective classes.

The machine learning system is configured for determining the output signal using the input signal and behavior signal as input. In machine learning system, any system suitable model for predicting time series may be used, especially neural networks such as recurrent neural networks or transformers. The model may be part of the machine learning system with the machine learning system further comprising methods for preprocessing or postprocessing. For example, the machine learning system may characterize a pipeline of operations with at least one optional preprocessing method, which provides a result to the model, which in turn provides a result to at least one postprocessing method, wherein the postprocessing method then provides the output signal. Alternatively, the machine learning system may simply be the model itself.

The behavior signal may be used as a conditioning input to the machine learning system by supplying the model with the behavior signal as an additional input. For example, the behavior signal may be concatenated to each element of the trajectory, i.e., to each element of the sequence. Alternatively, the behavior signal may be provided as a separate input to the model, e.g., by means of cross attention.

Compared to other methods, the use of the behavior signal allows to inject additional external information into the process of determining the output signal. In other words, the output signal is conditioned on the behavior signal. This may be understood as the machine learning system characterizing a conditional probability distribution, wherein the output signal is determined conditional on the behavior signal. The inventors found that using this method increases a performance of the machine learning system, i.e., the machine learning system provides output signals that better characterize actual trajectories of objects.

The behavior signal may especially characterize semantic behavior of the object. For example, the object might be a human or be controlled by a human, wherein the semantic behavior characterizes actions of the humans. The human may act, for example, aggressively, passively, may react slow or fast, or maybe distracted or attentive in his or her behavior. It is, for example, possible to characterize a behavior classification in terms of a vector of possible behaviors. The vector may, for example, characterize a one-hot encoding of a class from a plurality of different behavior classes. Alternatively, it is also possible that a behavior classification is characterized by multiple different classifications, e.g., in the form of a binary vector encoding, e.g.,
- style of operation (aggressive/passive)
- behavior safety (safe/unsafe)
- reaction time (fast/slow)
- maneuver type (e.g., when operating a vehicle in traffic: following/overtaking)
- driver attention (e.g., distracted /attentive).

The behavior signal may then consist of or comprise any of the aforementioned vectors. Alternatively, the behavior signal may be obtained based on such vectors, e.g., by embedding a respective vector into a space of real numbers by means of a machine learning system, e.g., an autoencoder.

The behavior signal and the input signal may be provided to the machine learning system as separate inputs. Alternatively, the two signals may be concatenated and the concatenated signal may be provided as input to the machine learning system. The machine learning system preferably provided parameters, which are used for processing the input or the inputs of the machine learning system. For example, the machine learning system may be a neural network and the parameters may comprise the weights of the neural network. In principle, any neural network that is suitable for predicting trajectories may be used in the method albeit being adapted to include the behavior signal as input.

The behavior signal may be provided to the method for determining a likely trajectory under a desired behavior. For example, when predicting trajectories of traffic participants of an at least partially automated vehicle, the behavior signal could be set to characterize an unsafe and/or aggressive behavior in order to determine a "worst case" trajectory.

Alternatively, the behavior signal may be determined based on the obtained input signal.

Advantageously, this allows for adapting a prediction of a trajectory based on additional information about the past trajectory of the object without requiring a manually inserted information.

It is, for example, possible that the behavior signal characterizes a behavior classification obtained from a second machine learning system, wherein the second machine learning system is configured to determine the behavior signal using the input signal as input.

The second machine learning system may, for example, be configured to accept the input signal as input and provide the behavior signal. The second machine learning system may be trained in an additional step of the method for determining the output signal. For example, the second machine learning system may be supervisedly trained with a plurality of input signals characterizing trajectories, wherein each trajectory is assigned a behavior signal as label.

Advantageously, the behavior signal may hence be provided automatically without the need for selection by a human.

Alternatively, the second machine learning system may be configured to determine the behavior signal based on a clustering of a plurality of input signals.

The aforementioned plurality of input signals may hence also be provided without labels, wherein the plurality may then be clustered according to, e.g., k-means clustering. The resulting cluster centers may then be understood as defining abstract behavior concepts. For determining a behavior signal for an input signal, a cluster id corresponding to a cluster center closest to the input signal may then be provided as behavior signal.

Advantageously, this approach does not require a labeling of the plurality of input signals.

Alternatively, the behavior signal may be determined based on the obtained input signal according to at least one rule that defines a mapping of a speed and/or an acceleration of the object and determined based on the input signal to a behavior classification.

For example, a velocity threshold and/or an acceleration threshold may be defined which discriminate a given trajectory into either safe or unsafe, aggressive or passive. The threshold may be with respect to lateral and/or longitudinal acceleration. For lateral and/or longitudinal acceleration, different thresholds may also be defined.

In general, the input signal may be obtained by recording the object with an optical sensor and detecting the object in the recording.

The object may, for example, be recorded by a camera and a resulting image may then be used as input for an object detection algorithm, e.g., based on a neural network. This procedure may be conducted for a plurality of points in time thereby determining different positions of the object and hence a trajectory of the object. Any known object detection algorithm is suitable for use in these embodiments. Likewise, other optical sensors such as LIDAR, radar, ultrasonic or thermal cameras can also be used as for recording a sensor signal, which may then be processed by an object detection algorithm to detect objects in the sensor signal.

It is also possible that a control signal configured for controlling a technical system is determined based on the determined output signal.

For example, the control signal may be configured to control a robot, e.g., an at least partially automated vehicle. The control signal may be configured to control a robot by being configured to control an actuator of the robot, in other words, supply commands to the actuator that result in the actuator performing specific operations. For example, the output signal may be used to determine future trajectories of objects around the robot, e.g., traffic participants, wherein a trajectory of the robot is determined based on the output signal. The trajectory may then be processed to derive control commands for, e.g., an accelerator of the vehicle (i.e., an actuator) and/or a steering of the vehicle to determine a control command to make the robot follow the planned trajectory.

In another aspect, the invention concerns a computer-implemented method for training the aforementioned machine learning system, wherein the method comprises the steps of:
- Determining a training output signal by executing the steps of the method for determining the output signal using a provided training input signal characterizing a measurement of a trajectory of an object as input signal and using a provided training behavior signal characterizing a behavior classification of the trajectory as behavior signal;
- Determining a loss value characterizing a deviation of the training output signal to a desired training output signal, wherein the training output signal corresponds to the training input signal;
- Adapting parameters of the machine learning system based on the loss value.

The method for training may be understood as a way to train the machine learning system in a supervised fashion, i.e., to perform supervised training. The training input signal may preferably be provided from a training dataset. The training behavior signal may be understood as assigning a classification of a driving style to the training input signal and may hence be understood to correspond to the training input signal.

The training behavior signal may especially characterize the classes and be designed as described above for the behavior signal. The training behavior signal may especially be obtained by manually labelling a training input signal by, e.g., a human expert or auto labelling.

Auto labelling may especially be achieved by any method as presented, e.g., rule-based or by means of the second machine learning system.

Embodiments of the invention will be discussed with reference to the following figures in more detail. The figures show:
- Figure 1: a training system for training a machine learning system;
- Figure 2: a control system comprising the machine learning system for controlling an actuator in its environment;
- Figure 3: the control system controlling an at least partially autonomous robot.

### Description of the embodiments

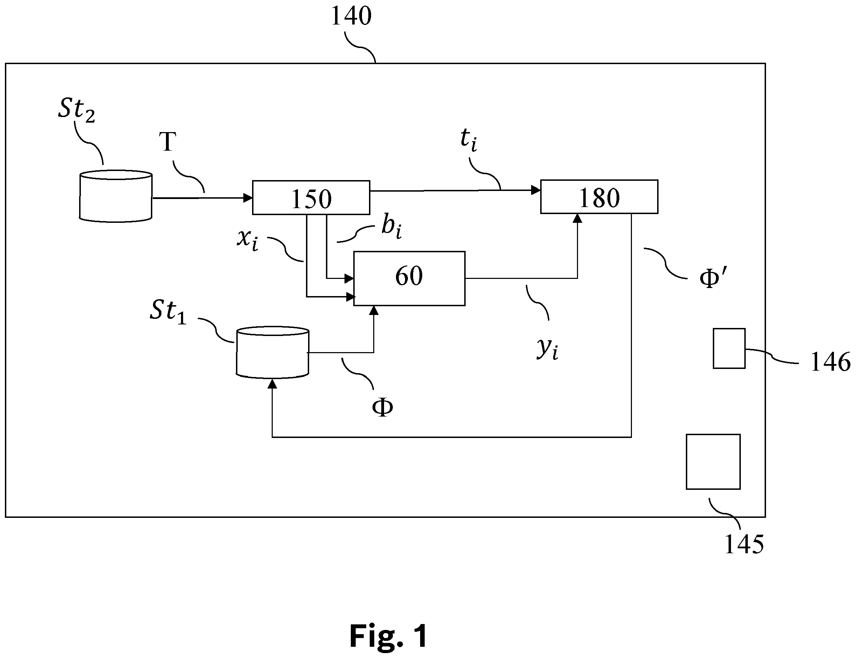

Figure 1 shows an embodiment of a training system (140) for training a machine learning system (60) by means of a training data set (T). The training data set (T) comprises a plurality of training input signals (*xᵢ*) which are used for training the machine learning system (60). The training input signal (*xᵢ*) characterizes a trajectory of an object in the physical world, i.e., the training input signal (*xᵢ*) comprises the trajectory or consists of the trajectory. The trajectory may be represented by a sequence of positions and/or velocities and/or accelerations of the object. The sequence comprises the respective positions and/or velocities and/or accelerations at certain points in time, preferably at evenly spaced points in time. For each training input signal (*xᵢ*) there exists a corresponding desired output signal (*tᵢ*) characterizing a continuation of the trajectory of the corresponding training input signal (*xᵢ*), in other words, the desired output signal (*tᵢ*) comprises or consists of a trajectory that represents how the trajectory in the training input signal (*xᵢ*) continues. The training dataset (T) further comprises for each training input signal (*xᵢ*) a training behavior signal (*bᵢ*), wherein the training behavior signal (*bᵢ*) comprises or consist of a behavior classification characterizing as described above.

For training, a training data unit (150) accesses a computer-implemented database (St₂), the database (St₂) providing the training data set (T). The training data unit (150) determines from the training data set (T) preferably randomly at least one training input signal (*xᵢ*) and the corresponding desired output signal (*tᵢ*) and behavior signal (*bᵢ*) and transmits the training input signal (*xᵢ*) and the behavior signal (*bᵢ*) as input to the machine learning system (60).

The machine learning system (60) may especially be a neural network such as a recurrent neural network. Preferably, the machine learning system (60) comprises or consists of a transformer. The behavior signal (*bᵢ*) may especially be concatenated to each element of the training input signal (*xᵢ*) in order to be used as input for the machine learning system (60). Alternatively, the behavior signal (*bᵢ*) may be used as an additional input besides the training input signal (*xᵢ*), e.g., by means of using a cross-attention layer in the machine learning system (60). The behavior signal (*bᵢ*) may especially be embedded into an embedding space by means of a layer of the machine learning system (60), wherein the resulting embedding may alternatively be used in the cross-attention layer.

The machine learning system (60) determines a training output signal (*yᵢ*) based on the training input signal (*xᵢ*) and the behavior signal (*bᵢ*), wherein the training output signal (*yᵢ*) characterizes a future trajectory with respect to the trajectory characterized by the training input signal (*xᵢ*).

The desired output signal (*tᵢ*) and the determined training output signal (*yᵢ*) are transmitted to a modification unit (180).

Based on the desired output signal (*tᵢ*) and the determined training output signal (*yᵢ*), the modification unit (180) then determines new parameters (Φ') for the machine learning system (60). For this purpose, the modification unit (180) compares the desired training output signal (*tᵢ*) and the determined output signal (*yᵢ*) using a loss function. The loss function determines a first loss value that characterizes how far the determined training output signal (*yᵢ*) deviates from the desired output signal (*tᵢ*). In the given embodiment, a negative log-likehood function is used as the loss function. Other loss functions are also conceivable in alternative embodiments. For example, the loss function may be a function that characterizes a squared Euclidean distance or Euclidean distance of the elements of the training output signal (*yᵢ*) and the desired output signal (*tᵢ*)

The modification unit (180) determines the new parameters (Φ') based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the machine learning system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

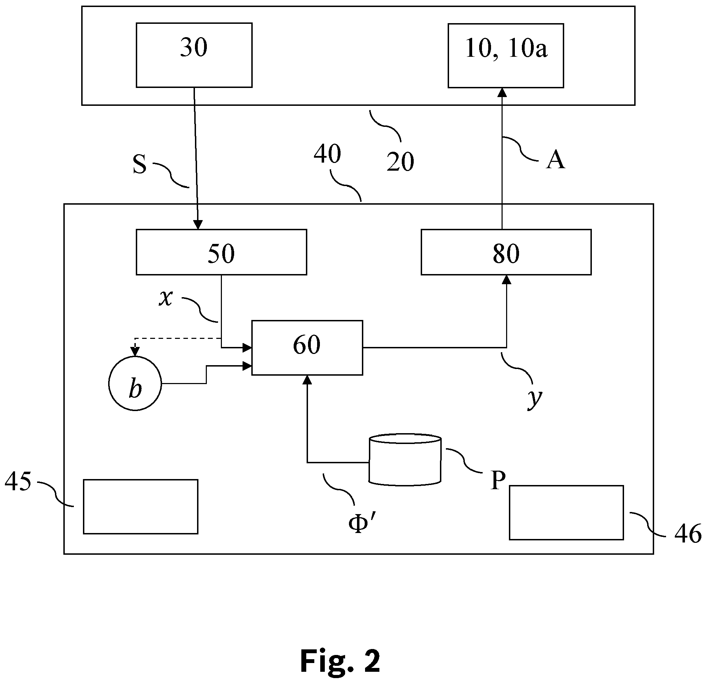

Figure 2 shows an embodiment of control system (40), which comprises the machine learning system (60) for controlling an actuator (10) in its environment (20). The machine learning system (60) has preferably been trained with a method as described above. The actuator (10) and its environment (20) will be jointly called actuator system. At preferably evenly spaced points in time, a sensor (30) senses an object of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) is configured to transform the sensor signals (S) into input signals (*x*), wherein the receiving unit is further configured to detect the object in the supplied sensor signal (S) and provides its position and/or velocity and/or acceleration in the input signal (*x*) as a trajectory. The receiving unit may preferably comprise a neural network for detecting the object in the sensor signal (S). Alternatively, in case of no receiving unit (50), each sensor signal (S) may directly be taken as an input signal (*x*). The input signal (*x*) may, for example, be given as an excerpt from the sensor signal (S). Alternatively, the sensor signal (S) may be processed to yield the input signal (*x*)*.* In other words, the input signal (*x*) is provided in accordance with the sensor signal (S).

The input signal (*x*) is then passed as input on to the machine learning system (60). In addition, a behavior signal (*b*) is passed input to the machine learning system (60). The behavior signal (*b*) characterizes a behavior classification according to the embodiments as presented above. The behavior signal (*b*) may, for example, be a fixed behavior signal (*b*). Alternatively, the behavior signal (*b*) may be derived from the trajectory characterized by the input signal (*x*), indicated by a dashed line in the figure. The behavior signal (*b*) may, for example, be determined based on the trajectory by means of a set of rules or a second machine learning system as described above.

The machine learning system (60) is parametrized by parameters (Φ), which are stored in and provided by a parameter storage (*St*₁)*.*

The machine learning system (60) determines an output signal (*y*) from the input signals (*x*). The output signal (*y*) characterizes a future trajectory of the object conditioned on the behavior classification characterized by the behavior signal (*b*). The output signal (*y*) is transmitted to an optional conversion unit (80), which converts the output signal (*y*) into the control signals (A). The control signals (A) are then transmitted to the actuator (10) for controlling the actuator (10) accordingly. Alternatively, the output signal (*y*) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

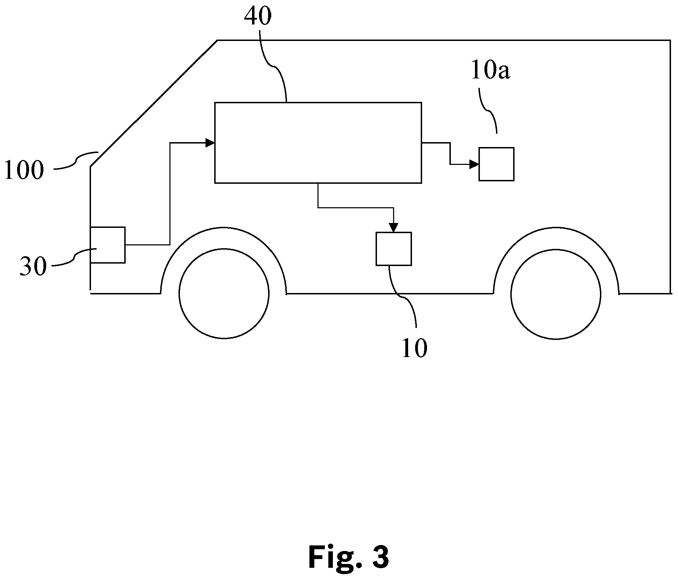

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The machine learning system (60) may be configured to detect objects in the vicinity of the at least partially autonomous robot based on the input image (*x*). The output signal (*y*) may comprise an information, which characterizes future trajectories of the objects based on the behavior of the respective objects. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects.

Alternatively or additionally, the control signal (A) may also be used to control the display (10a), e.g., for displaying the objects and their future trajectories as predicted by the machine learning system (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method for predicting an output signal (*y*) characterizing a future trajectory of an object, wherein the method comprises the steps of:
• Obtaining an input signal (*x*) characterizing a measurement of a trajectory of the object;
• Obtaining a behavior signal (*b*) characterizing a behavior classification of the trajectory or the future trajectory, e.g., classifying the trajectory as aggressive behavior or a passive behavior;
• Determining the output signal (*y*) by providing the input signal (*x*) and the behavior signal (*b*) as input to a machine learning system (60), wherein the machine learning system (60) is configured to determine an output signal (*y*) characterizing a future trajectory an object based on the values of an input signal (*x*) characterizing a measurement of a trajectory of the object and a behavior signal (*b*) characterizing a behavior classification of the trajectory.

2. Method according to claim 1, wherein the behavior signal (*b*) is determined based on the obtained input signal (*x*).

3. Method according to claim 2, wherein the behavior signal (*b*) is a behavior classification obtained from a second machine learning system (70), wherein the second machine learning system (70) is configured to determine the behavior signal (*b*) using the input signal (*x*) as input.

4. Method according to claim 3, wherein the second machine learning system (70) is configured to determine the behavior signal based on a clustering of a plurality of input signals.

5. Method according to claim 2, wherein the behavior signal (*b*) is determined based on the obtained input signal (*x*) according to at least one rule that defines a mapping of a speed and/or an acceleration of the object and determined based on the input signal (*x*) to a behavior classification.

6. Method according to any one of the claims 1 to 5, wherein the input signal (*x*) is obtained by recording the object with an optical sensor (30), e.g., a camera, and detecting the object in the recording.

7. Method according to any one of the claims, wherein a control signal (A) configured for controlling a technical system (100, 200) is determined based on the determined output signal (*y*).

8. Computer-implemented method for training the machine learning system (60) according to any one of the claims 1 to 6, wherein the method comprises the steps of:
• Determining a training output signal (*yᵢ*) by executing the steps of the method according to any one of the claims 1 to x by using a provided training input signal (*xᵢ*) characterizing a measurement of a trajectory of an object as input signal (*x*) and using a provided training behavior signal (*bᵢ*) characterizing a behavior classification of the trajectory as behavior signal (*bᵢ*);
• Determining a loss value characterizing a deviation of the training output signal (*yᵢ*) to a desired training output signal (*tᵢ*), wherein the training output signal (*tᵢ*) corresponds to the training input signal (*xᵢ*);
• Adapting parameters of the machine learning system (60) based on the loss value.

9. Training system (140), which is configured to carry out the training method according to claim 8.

10. Control system (40), which is configured to carry out the method according to claim 7.

11. Computer program that is configured to cause a computer to carry out the method according to any one of the claims 1 to 8 with all of its steps if the computer program is carried out by a processor (45, 145).

12. Machine-readable storage medium (46, 146) on which the computer program according to claim 11 is stored.
